# EUROPEAN PATENT APPLICATION

(11) **EP 1 870 224 A1**
(43) Date of publication of application: **26.12.2007**
(21) Application number: 06115770.7
(22) Date of filing: 21.06.2006
(51) Int. Cl.: B29C 49/00, C08L 23/10, A61J 1/00

(54) **Low melt flow resins for medical applications in injection-stretch-blow-moulding**

(71) Applicant: TOTAL PETROCHEMICALS RESEARCH FELUY, 7181 Seneffe (Feluy) (BE)
(72) Inventor: Duranel, Laurent, B-1400 Nivelles (BE); Humbeeck, Emmanuel, B-7181, Feluy (BE)

(57) **Abstract**

The present invention discloses a method for preparing vials, preferably medical vials, by one-stage injection-stretch-blow-moulding with a random copolymer of propylene (RCP) having a melt index of from 1 to 3 dg/min, an ethylene content of less than 3.5 wt% with respect to the weight of the RCP and wherein the preform injection temperature is of at least 210 °C.

## Description

The present invention relates to the preparation medical vials with low melt flow polypropylene resins by one-stage injection-stretch-blow-moulding (ISBM).

EP-A-151741 to Mitsui discloses single-stage manufacturing of articles by ISBM. These articles are prepared from propylene-ethylene random copolymers having a melt flow index of from 4 to 50 dg/min and containing a nucleating agent. The injection moulding temperature is of from 200 to 260 °C and all examples have been carried out with an injection moulding temperature of 220 °C.

WO95/11791 to Bekum is directed to a two-stage process for preparing articles by ISBM. The preferred resin is an ethylene-propylene copolymer containing more than 50 wt% of propylene and having a melt index of from 10 to 20 dg/min. The injection cavity fill rate is of from 3 to 5 grams per second and the injection temperature is of about 210 °C.

WO05/074428 to Milliken discloses a two-stage process for preparing articles by ISBM. The resin is a polypropylene composition having a melt flow index of from 6 to 50 dg/min, preferably from 13 to 35 dg/min prepared by any method known in the art. The mould fill rate is larger than 5 grams per second and the preform articles have sidewalls having a maximum thickness of less than 3.5 mm. The injection temperatures cited in the examples are of 230 and 240 °C.

WO99/41293 to BASF discloses the use of metallocene-produced homo- or copolymers of propylene in ISBM. The range of melt indexes is broadly defined from 0.1 to 1000 dg/min and the injection temperature is of from 200 to 280 °C. The polydispersity index of metallocene-prepared polypropylene is very narrow.

None of these resins produce articles having an ideal balance of properties.

It is an aim of the present invention to produce medical vials by one-stage injection-stretch-blow-moulding.

It is another aim of the present invention to provide a method that uses low melt flow polypropylene resins for preparing preforms for injection-stretch-blow-moulding in order to prepare medical vials having excellent optical properties after bi-orientation.

It is also an aim of the present invention to produce medical vials having good thickness distribution.

It is a further aim of the present invention to produce medical vials having good stacking properties.

It is yet another aim of the present invention to produce medical vials having excellent drop test, especially at low temperature.

Any one of these aims is fulfilled, at least partially, by the present invention.

Accordingly, the present invention discloses medical vials prepared by one-stageinjection-stretch-blow-moulding with a random copolymer of propylene (RCP) having a melt index of from 1 to 3 dg/min, an ethylene content of less than 3.5 wt% with respect to the weight of the RCP and wherein the preform injection temperature is of at least 210°C.

The present invention also comprises the method for preparing the preforms, the preforms so obtained, the use of said preforms for preparing medical vials, and the medical vials prepared from said preforms.

The melt flow index M12 is measured following the method of standard test ISO 1133 under a load of 2.16 kg and at a temperature of 230 °C.

Preferably, the polypropylene resin used in the present invention is prepared with a Ziegler-Natta (ZN) catalyst system. ZN catalyst systems inherently produce polymers having a broad polydispersity index. The polydispersity index is defined as the ratio Mw/Mn of the weight average molecular weight Mw over the number average molecular weight Mn. Molecular weights are measured by Gel Permeation Chromatography (GPC). Ziegler-Natta catalyst system typically produce polymers having a polydispersity index of at least 6. For sake of clarity, it is repeated that metallocene and single-site catalysts are not ZN catalysts.

The resin is a random copolymer of propylene. The preferred comonomer is ethylene and the amount of ethylene present in the resin is of at most 3.5 wt%, preferably at most 3 wt%. The preferred minimum is of 1 wt%.

The melt index is of at most 3 dg/min. The preferred minimum MI2 is of 1.5 dg/min; the preferred maximum MI2 is of 2.5 dg/min, more preferably of 2 dg/min.

This type of low melt flow resin is generally not used in one-stageinjection-stretch-blow-moulding applications and the injection-stretch-blow-moulding conditions are thus adapted to work with that resin.

The resin may additionally contain up to 5000 ppm of nucleating agent Preferably, if present, the nucleating agent is used in an amount of from 200 to 2500 ppm.

Other additives typically employed in the field may be added, such as antioxidants or antistatic.

In addition the present resin is one of the few resins accepted for medical applications. When the invention is used to prepare medical vials, nucleating agents must be selected among those that are accepted in medical applications, such as talc and sodium benzoate. More preferably, there is no nucleating agent. Other additives allowed in medical applications such as for example those described in European Pharmacopoeia §3.1.6 may be added.

The injection temperature of the preforms is of at least 210 °C, preferably of at least 220 °C and more preferably of at least 230 °C.

The injection temperature is preferably increased for low melt index resin in order to avoid excessive stress. Increasing the injection temperature allows to increase the injection rate without increasing the stress.

At a specified injection temperature, the mould filling rate over gate diameterratio is of at most 10 cc/s/mm, preferably 6 cc/s/mm. Preferably it has a minimum value of 3 cc/s/mm. The gate diameters that are typically used in the field are of from 2 to 4 mm, preferably this invention uses gate diameters of from 2.8 to 4 mm.

The injection-stretch-blow-moulding can be carried out either in a two-stage process carried out on two separate machines (cold cycle), or in a single-stage process carried out on a single machine (hot cycle). In the present invention, the one-stage process is used: all steps are carried out in the same machine.

Injection stretch blow moulding comprises the steps of:
- providing a pre-form by injection moulding on a multi-cavity mould;
- optionally slightly re-heating the pre-form;
- optionally, passing the heated pre-form through an equilibration zone to allow the heat to disperse evenly through the pre-form wall;
- optionally, submitting the preform to a pre-blow step;
- stretching the pre-form axially by a centre rod;
- orienting the stretched pre-form radially by high pressure air.

Preferably, the re-heating step is carried out in a reflective radiant heat oven or in front of an adequate source of heat, like an air knife, following a pre-determined temperature profile adapted to the pre-form.

In this process, the stretching step is critical: it requires homogeneous heating of the pre-form and thus optimisation of the pre-form.

The pre-blow pressure is generally of from 4 to10 bars, preferably of from 6 to 8 bars. The stretching is then typically carried out under a blowing pressure of from 5 to 40 bars, preferably of from 8 to 30 bars, according to preform wall thickness. The stretch rod speed is of from 1000 to 2000 mm/s, preferably of from 1400 to 1800 mm/s and most preferably of about 1600 mm/s. The stretch rod diameter depends upon the size of the preform. The best results for material distribution in the finished article are obtained when the rod diameter is about 2/3 of that of the preform. For example, for a preform having a diameter of 25 mm, the preferred rod diameter is of about 16 mm.

Improved impact strength vials with superior stiffness and transparency are particularly adapted for medical applications. The new bottle of the present invention can advantageously replace standard glass bottle, saving weight and energy for its production and transportation. Furthermore, in line optical control of the solution contained into the medical vials can readily be applied due to the glass-clear quality of the containers produced by the present process. In addition the new bottles are safer than conventional polypropylene blow moulded bottles container because they are produced without the welding line at the vial's bottom, typical of blow moulding process, that can lead to formation of leaks and thus require careful quality control. Indeed polypropylene resins have poor welding properties because of their high melt temperature.

The medical vials prepared with the preforms of the present invention have remarkable optical properties: they have an excellent transparency throughout their whole body or at least throughout most of their body. In addition they have good wall thickness distribution, excellent drop test and very good top load and stacking properties. They also have a number of desirable properties such as for example low water vapour permeability, good squeezability, and excellent heat resistance allowing for example hot filling, microwave heating or sterilisation.

## Claims

1. A method for preparing vials by one-stage injection-stretch-blow-moulding with a random copolymer of propylene (RCP) having a melt index of from 1 to 3 dg/min, an ethylene content of less than 3.5 wt% with respect to the weight of the RCP and wherein the preform injection temperature is of at least 210 °C.

2. The method of claim 1 wherein the vials are medical vials.

3. The method of claim 1 or claim 2 wherein the preform injection temperature is of at least 220 °C.

4. The method of any one of claim 1 to 3 wherein the melt index is of from 1.5 to 2.5 dg/min.

5. The method of any of one of the precedinf claims wherein the mould filling rate over gate diameter ratio is of at most 10 cc/s/mm.

6. Vials obtainable by the method of any one of claims 1 to 5.

7. Use of a random copolymer of propylene having a melt flow index of from 1 to 3 dg/min and an ethylene content from 2 to 3.5 wt% based on the weight of the resin to prepare medical vials by one-stageinjection-stretch-blow-moulding.
